# EUROPEAN PATENT SPECIFICATION

(11) **EP 4 404 053 B1**
(45) Date of publication and mention of the grant of the patent: **29.04.2026**
(21) Application number: 22866763.0
(22) Date of filing: 09.09.2022
(51) Int. Cl.: G06F 8/654, G06F 9/4401

(54) **METHOD FOR FLASHING ECU MOUNTED ON VEHICLE, VEHICLE, AND STORAGE MEDIUM**
VERFAHREN ZUM FLASHING EINER AN EINEM FAHRZEUG MONTIERTEN ECU, FAHRZEUG UND SPEICHERMEDIUM
PROCÉDÉ DE CLIGNOTEMENT D'ECU MONTÉ SUR UN VÉHICULE, VÉHICULE ET SUPPORT DE STOCKAGE

(30) Priority: 13.09.2021 CN 202111070177
(43) Date of publication of application: 24.07.2024
(73) Proprietor: Great Wall Motor Company Limited, Hebei 071000 (CN)
(72) Inventor: WANG, Bo, Baoding, Hebei 071000 (CN); PAN, Huan, Baoding, Hebei 071000 (CN); LI, Tengfei, Baoding, Hebei 071000 (CN)
(74) Representative: Klunker IP Patentanwälte PartG mbB
(86) International application number: PCT/CN2022/118148
(87) International publication number: WO 2023/036302

(56) References cited:
- CN-A- 105 511 912
- CN-A- 107 544 473
- CN-A- 110 532 001
- CN-A- 112 114 832
- CN-A- 112 506 535
- CN-A- 112 764 786
- CN-A- 113 010 200
- US-A1- 2013 212 571
- US-A1- 2013 218 371
- US-A1- 2019 220 265
- YU SHANG, YAN YANG: "Diagnostics and Software Updata of Vehicle Unit Based on Telematics", AUTOMOBILE APPLIED TECHNOLOGY., vol. 09, no. 9, 30 September 2016 (2016-09-30), pages 183 - 185, XP093046063, ISSN: 1671-7988, DOI: 10.16638/j.cnki.1671-7988.2016.09.061

## Description

### TECHNICAL FIELD

The present invention relates to the field of vehicle technologies, and more particularly, to a method for flashing a vehicle-mounted ECU, a vehicle, and a storage medium.

### BACKGROUND

An electronic control unit (ECU) is one of core components of a vehicle.

When the ECU has a fault or a program of the ECU needs to be upgraded, the ECU needs to be disassembled from the vehicle, and the ECU is flashed manually through a specific device, a large amount of time needs to be consumed in a whole flashing process of the ECU.

US 2013/218371 A1 discloses an add-on device for managing an ECU of a vehicle having one or more of said ECU, a communication network linked thereto for circulating data related to the one or more ECU, and a user interface being integrated in the vehicle and communicating with the communication network, the vehicle further having a vehicle interface communicating with the communication network, the add-on device comprising: a transceiver adapted to cooperate with the vehicle interface for communicating with the communication network; and a controller being communicatively connected to the transceiver, and adapted to generate a user-interface control signal addressed to said user interface, in order to manipulate the user interface of the vehicle and to present thereon command options prompting a user to enter a command selection in response thereto, the command selection being representative of an operation to be executed with respect to a targeted one of the one or more ECU, the controller being further adapted to receive the command selection from the user interface, and to generate in response thereto, an ECU control signal to be sent via the transceiver, to the communication network for executing said operation, in order to manage the targeted ECU from the user interface of the vehicle.

US 2019/220265 A1 discloses a method for controlling and authorising software updates, in particular by requiring a user action such as pressing and holding a button to indicate readiness for an update.

### SUMMARY OF THE INVENTION

### TECHNICAL PROBLEM

It is an object of the present invention to provide a method for flashing a vehicle-mounted ECU, a corresponding ECU, a vehicle comprising the ECU, and a storage medium.

### SOLUTIONS FOR SOLVING THE PROBLEM

### TECHNICAL SOLUTIONS

The object is achieved by the features of the independent claim 1 regarding the method, of the independent claim 11 regarding the ECU, of the independent claim 12 regarding the vehicle, and of the independent claim 13 regarding the storage medium.

Further embodiments are defined in the respective dependent claims.

### BENEFICIAL EFFECTS OF THE INVENTION

### BENEFICIAL EFFECTS

In the present invention, after the ECU is restarted, the ECU detects whether the first operation is performed on the vehicle. If the first operation is performed, and the time duration of the first operation is greater than the preset threshold value, the ECU enters the emergency boot mode. The ECU obtains the first-data-to-be-flashed after entering the emergency boot mode and completes flashing of the ECU based on the first-data-to-be-flashed.

### BRIEF DESCRIPTION OF THE DRAWINGS

### DESCRIPTION OF THE DRAWINGS

In order to explain the technical solutions of the present invention, a brief introduction of the accompanying drawings is given below.
FIG. 1 is a schematic diagram of an application scenario of a method for flashing a vehicle-mounted electronic control unit (ECU);
FIG. 2 is a schematic flow diagram of the method for flashing the vehicle-mounted ECU;
FIG. 3 is a schematic flow diagram of the method for flashing the vehicle-mounted ECU;
FIG. 4 is a schematic structural diagram of a connection among a computer, an OBD interface and the ECU;
FIG. 5 is a schematic structural diagram of the OBD interface;
FIG. 6 is a schematic flow diagram of ECU flashing in a normal boot mode;
FIG. 7 is a schematic structural diagram of the ECU;
FIG. 8 is a schematic structural diagram of the vehicle.

### EMBODIMENTS OF THE INVENTION

In order to make the objective, the technical solutions and the advantages of the present invention be clearer and more understandable, the present invention will be further described in detail below with reference to accompanying figures.

In addition, terms such as "the first" and "the second" are only for the purpose of illustration, rather than being interpreted as indicating or implying any relative importance, or implicitly indicating the number of indicated technical features. The term of "a plurality of" indicates a number of at least two, unless otherwise the term of "a plurality of" is explicitly and specifically defined.

In order to illustrate the technical solutions provided in the present application, the present application is described in detail below with reference to the specific accompanying drawings and embodiments.

An electronic control unit (ECU) generally has fault self-diagnosis and protection function. When a system generates fault information, the system may automatically record a fault code in a random access memory (RAM) or a Flash and use a protection measure to read an alternative program from a firmware to maintain a function (e.g., a function of a safety lamp) that must be maintained.

When the ECU has a fault or a program version of the ECU is much lower, the program in the ECU needs to be upgraded. Management and upgrade of ECU data are referred to as flashing of the ECU.

At present, after the ECU is restarted and electrified (also called powered-on), if a program of a computer connected to the ECU is obtained, the program in the ECU is directly flashed. In the aforementioned method, a condition that the user is not willing to flash the ECU, but the flashing of the ECU is automatically performed is prone to occur, and a situation that the finally obtained ECU is not desired by the user is caused, troubles are brought to the user. Thus, user experience becomes poor. In view of the above condition, a method for flashing a vehicle-mounted ECU is provided , the condition for automatic flashing of the ECU is set, a situation of undesired flashing of the ECU is reduced, and maloperation of the ECU is avoided. In addition, flashing of the ECU may be performed without disassembling the ECU from the vehicle. Thus, the flashing of the ECU is simpler and more convenient, and the flashing efficiency of the ECU is improved.

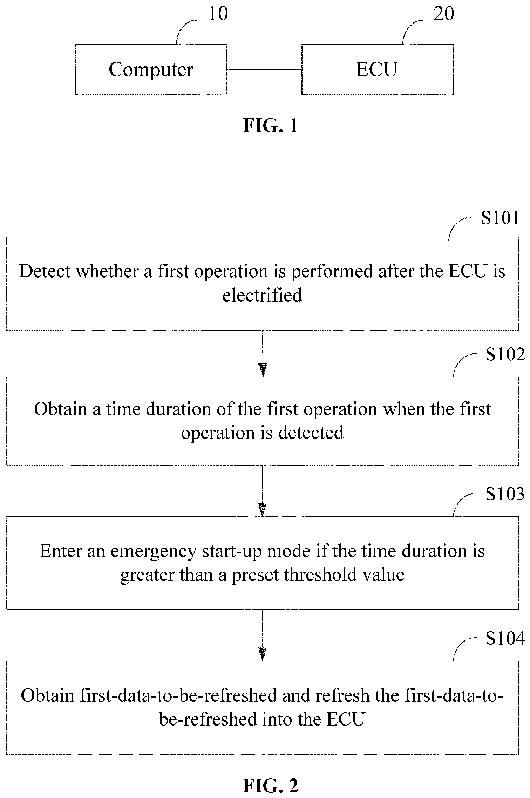

FIG. 1 is a schematic diagram of an application scenario of the method for flashing the vehicle-mounted ECU according to one embodiment of the present application. The method for flashing the vehicle-mounted ECU may be used for upgrading the ECU of the vehicle. A computer 10 is configured to store data to be flashed, the ECU 20 is configured to obtain the data to be flashed from the computer 10 when determining that a flashing operation needs to be performed, so that the data to be flashed is flashed into the ECU.

The method for flashing the vehicle-mounted ECU according to the embodiments of the present application is described in detail below.

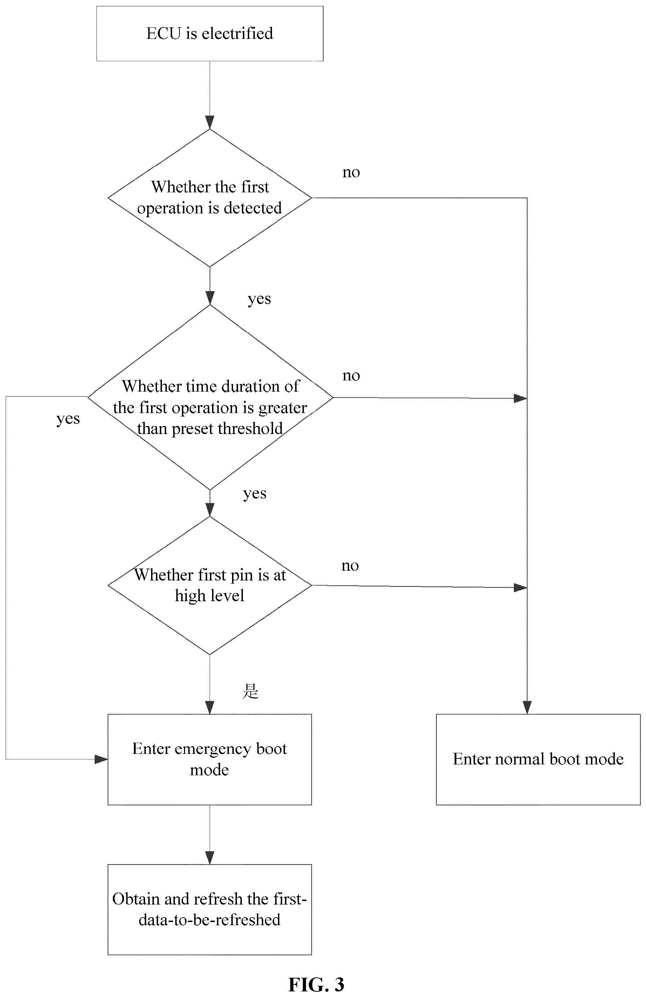

FIG. 2 and FIG. 3 illustrate a schematic flowchart of the method for flashing the vehicle-mounted ECU according to the present application. Referring to FIG. 2 and FIG. 3, the method includes steps S101 to S104.

In the step of S101, after the ECU is electrified, the ECU detects whether a first operation is performed.

In this embodiment, a process from powering off of the ECU to powering on of the ECU is referred to as a restart process. The ECU detects whether the first operation is performed on the vehicle on which the ECU is mounted within a preset time, after each restart. The preset time may be set as required. For example, the preset time may be set to 50 seconds, 60 seconds, 70 seconds, or the like.

The first operation may be set as needed. The first operation may include at least one of a braking operation, a key press operation on an air conditioning, and a key press operation on a steering wheel. The key press operation on the steering wheel may include a turn signal lamp turn-on operation, a wiper turn-on operation, a horn turn-on operation, and the like.

Specifically, a method for detecting the first operation may include: obtaining a level signal of a preset circuit in the vehicle; determining that the first operation is detected if the level signal meets the preset operation requirement.

In this embodiment, the preset circuit may be a circuit corresponding to a brake switch, a circuit corresponding to an air conditioner switch, a switch corresponding to the operation on the steering wheel, and the like. If the preset circuit includes a circuit corresponding to the brake switch, the preset operation requirement includes a braking operation. If the preset circuit includes a circuit corresponding to the air conditioner switch, the preset operation requirement includes an air conditioner start operation. If the preset circuit includes a circuit corresponding to the switch that corresponds to the operation on the steering wheel, the preset operation requirement includes a start-up operation of a corresponding device on the steering wheel. Specifically, the detection of the key press operation on the air conditioner may include: obtaining a level signal of a switch of the air conditioner, if the level signal meets the start-up requirement, for example, the level signal is at a high level, the key press operation on the air conditioner is detected. Similarly, the key press operation on the steering wheel may be detected, the details of the key press operation on the steering wheel are not repeatedly described herein.

Specifically, if the first operation includes the braking operation, the implementation process of step S101 may include:
In the step of S1011, a level signal of the brake switch in the vehicle is obtained.

In this embodiment, the brake switch of the vehicle may be controlled by two lines. Specifically, the brake switch may be controlled together by a line 1 and a line 2. When the line 1 is at a low level and the line 2 is at a high level, the brake switch is in a non-braking state. When the line 1 is at a high level and the line 2 is at a low level, the brake switch is in a braking state. The ECU may determine whether the brake switch is in a braking state according to the level signal of the brake switch.

In a step of S1012, if the level signal of the brake switch meets the braking requirement, it is determined that the first operation is detected.

In the step of S1013, if the level signal of the brake switch does not meet the braking requirement, it is determined that the first operation is not detected.

In this embodiment, when the level signal of the brake switch meets the braking requirement, the brake switch is in the braking state, that is, the braking operation is detected. Specifically, a condition that the level signal of the brake switch meets the braking requirement includes: the line 1 is at the high level, and the line 2 is at the low level.

In the step of S102, if the first operation is detected, time duration of the first operation is obtained.

In this embodiment, if the ECU detects the first operation, timing may be started, and the time duration of the first operation is obtained by timing. The first operation needs to be continuously detected during timing so as to determine whether the first operation is continued to be performed. If the first operation is not detected, it can be determined that performing of the first operation is no longer continued.

Optionally, if the first operation is detected, a current time of the timer in the ECU may be recorded, and this time may be recorded as an initial time in the present application. The time duration of the first operation may be obtained according to a difference value between the current time of the timer and the initial time.

As an example, if the current time of the timer is 10 when the first operation is detected, performing of the first operation is still continued at the current time, when the current time timer is 15, the performing of the first operation has be lasted for 5 seconds.

In the step of S103, if the time duration is greater than a preset threshold value, the emergency boot mode is entered.

In this embodiment, if it is detected that the time duration of the first operation has exceeded the preset threshold value, a condition of the ECU for entering the emergency boot mode is determined, and the ECU may enter the emergency boot mode. The emergency boot mode may be a boot mode before a normal operation process.

In this embodiment, the preset threshold value may be set as required. For example, the preset threshold value may be set to 5 seconds, 8 seconds, 10 seconds, or the like.

As an example, if the preset time is 5 seconds, and it is detected that the first operation has been lasted for 6 seconds at the current time, it is determined that the time duration of the first operation is greater than the preset threshold value, the ECU enters the emergency boot mode.

In this embodiment, the start-up sequence of the programs in the ECU is boot program->App program (application program), the application program will be operated only after execution of the boot program is completed. The application program in the ECU is not executed in the emergency boot mode.

Bootloader, that is, the boot program, may be executed in the emergency boot mode. The boot program is a boot file of the system, and may be used to guide the ECU to enter an operating system. Specifically, the boot program is used to complete an entire system boot process of locating kernel codes in an external memory, and putting the kernel codes into the memory and finally enabling the kernel to be operated according to requirements. In this process, the boot program needs to complete a plurality of initialization processes, various services of the system may be used only after the processes are completed successfully. These processes include initial boot, kernel initialization, initialization of the entire system.

In the step of S104, first-data-to-be-flashed is obtained and is flashed into the ECU.

In this embodiment, the ECU may obtain the data to be flashed from an external computer. Specifically, after obtaining the data from the computer, the ECU may determine whether the version of the currently stored data in the ECU is the same as the version of the obtained data. If the version of the currently stored data in the ECU is the same as the version of the obtained data, the obtained data may be used to replace the currently stored data; or alternatively, the data may not be processed. If the version of the currently stored data in the ECU is different from the version of the obtained data, the obtained data may be stored in a Flash to complete flashing of the ECU. In the present application, the data obtained from the computer is referred to as the first-data-to-be-flashed.

In this embodiment of the present application, after the ECU is restarted, the ECU may detect whether the first operation is performed on the vehicle. If the first operation is detected, the time duration of the first operation may be obtained to determine whether the emergency boot mode may be entered. If the time duration of the first operation is greater than the preset threshold value, the ECU enters the emergency boot mode. The ECU obtains the first-data-to-be-flashed after entering the emergency boot mode, and completes flashing of the ECU based on the first-data-to-be-flashed. According to the present application, the ECU can be flashed without being disassembled. Thus, the flashing of the ECU is simpler and more efficient. In addition, according to the present application, the condition for entering the emergency boot mode is set, the emergency boot mode can be entered only when the condition for entering the emergency boot mode is met, the flashing of the ECU in an unexpected condition is avoided.

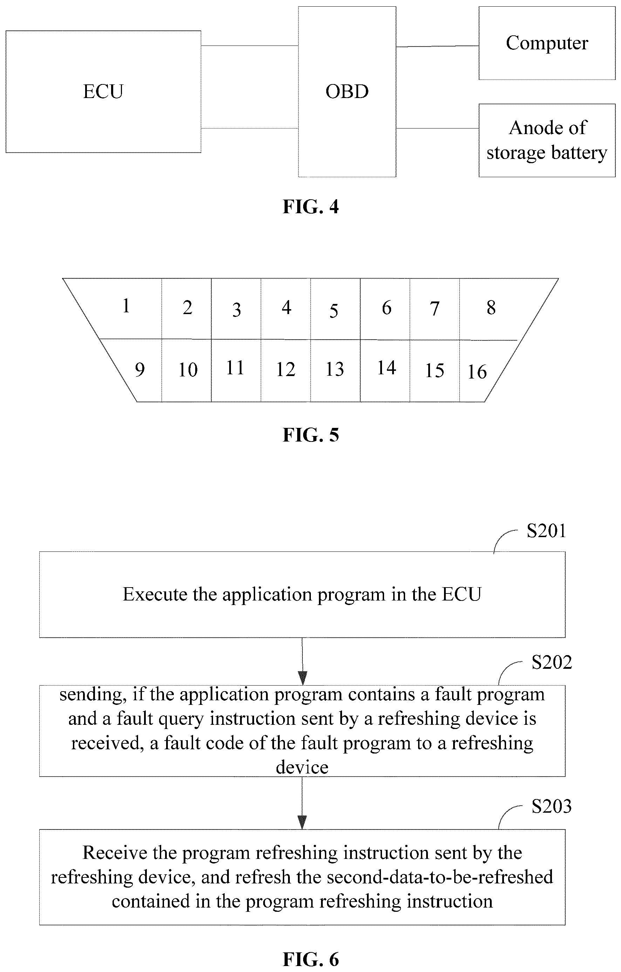

As shown in FIG. 4, in one possible implementation mode, if the ECU needs to obtain the data to be flashed in a wired connection manner, an Ethernet communication interface on the ECU may be utilized to perform wired connection with the computer, in order to obtain the data to be flashed from the computer being in wired connection with the ECU.

Specifically, if the first-data-to-be-flashed needs to be transmitted through the Ethernet communication interface in the ECU, the computer may be connected to an on board diagnostics (On Board Diagnostics, OBD) system interface through a network cable. The OBD interface is connected to the Ethernet communication interface in the ECU, and a communication between the computer and the ECU is implemented through the OBD interface. Specifically, the computer may be connected to ETHERNET TX+, ETHERNET TX-, ETHERNET RX+ and ETHERNET RX- in the OBD interface through the network cable. RX represents signal reception, TX represents signal transmission, referring to the schematic diagram of the OBD interface shown in FIG. 5, pin 3 is ETHERNET RX+, pin 11 is ETHERNET RX-, pin 12 is ETHERNET TX +, pin 13 is ETHERNET TX-.

Activation of the Ethernet communication interface requires control of an enable signal. If the enable signal exists, communication may be performed through the Ethernet communication interface, otherwise, communication cannot be performed through the Ethernet communication interface.

Specifically, a signal of a pull-up pin on Ethernet activation line in the OBD interface may provide the enable signal for the Ethernet communication interface, and a positive electrode of a storage battery of the vehicle may be connected to the pull-up pin of the Ethernet activation line in the OBD interface through a wire, such that the level signal of the pull-up pin of the Ethernet activation line is at a high level. As shown in FIG. 5, the pin 8 is a pull-up pin of the Ethernet activation line. When the pull-up pin of the Ethernet activation line is at the high level, the Ethernet communication interface is in a switched on state. When the pull-up pin of the Ethernet activation line is at a low level, the Ethernet communication interface is in a switched off state. In the present application, the pull-up pin of the Ethernet activation line may be referred to as the first pin.

If the ECU needs to obtain the data to be flashed in a wired connection manner, in order to ensure that the ECU can obtain the first-data-to-be-flashed from the computer through the Ethernet communication interface after entering the emergency boot mode, the condition that the ECU enters the emergency boot mode may further include: detecting a level signal of the first pin of the OBD interface connected to the Ethernet communication interface of the vehicle, and entering the emergency boot mode if the level signal is a high-level signal and the time duration of the first operation is greater than a preset threshold value.

In this embodiment, when the level signal of the first pin is at the high level, it may be determined that the Ethernet communication interface is in a switched on state, in order to ensure that the ECU may obtain the first-data-to-be-flashed from the computer through the Ethernet communication interface. The first pin being at a high level is used as a condition for entering the emergency boot mode, to ensure that the ECU can perform data flash successfully after entering the emergency boot mode.

As shown in FIG. 3, in one possible implementation mode, after the step of S101, the aforementioned method may further include:
if the first operation is not detected within a preset time after the ECU is electrified, a normal boot mode is entered. If the time duration is less than or equal to the preset threshold value, and/or the level signal of the first pin is at a low level, the normal boot mode is entered.

In this embodiment, if the first operation is not detected within the preset time, the ECU does not meet the condition of entering the emergency boot mode, the ECU enters the normal boot mode. The ECU may normally execute application programs in the ECU in the normal boot mode, and the application programs in the ECU may include a lamp lighting up program, a screen turning on program, a vehicle ignition program, and the like.

In this embodiment, if the first operation is detected, however, the time duration of the first operation is less than or equal to the preset threshold value, the ECU does not meet the condition of entering the emergency boot mode, and the ECU enters the normal boot mode.

In this embodiment, when the first-data-to-be-flashed needs to be obtained through the Ethernet communication interface, if the level signal of the first pin is at a low level, the condition for entering the emergency boot mode is not met, and the ECU enters the normal boot mode.

In this embodiment, the normal boot mode is a mode in which the ECU is started-up and executes an application program in the ECU. After entering the normal boot mode, the ECU executes the boot program firstly, and executes the application program after execution of the boot program is completed.

In one possible implementation mode, for the ECU entering the normal boot mode, a flashing device may be utilized to transmit data to be flashed to the ECU, thereby completing flashing of the ECU.

As shown in FIG. 6, specifically, after the entering the normal boot mode, the method includes:
In a step of S201, an application program in the ECU is executed.

In a step of S202, a fault code of the fault program is sent to the flashing device if the application program has a fault and a fault query instruction sent by the flashing device is received.

In this embodiment, the flashing device may be a vehicle fault diagnosis instrument. The automobile fault diagnosis instrument is a vehicle fault self-diagnosis terminal device, and is a portable intelligent vehicle fault self-diagnosis instrument for detecting vehicle fault, and a user may use this instrument to quickly read faults of various ECUs of vehicles, and quickly determine a faulty part and the reason of fault according to the displayed fault information.

In this embodiment, if the application program has a fault, the ECU generates the fault code of the fault program. The user may send the fault query instruction to the ECU through the flashing device. After receiving the fault query instruction sent by the flashing device, the ECU sends the fault code of the fault program to the flashing device.

After receiving the fault code, the flashing device parses the fault code to obtain a fault application corresponding to the fault code, and displays the fault application to the user. The flashing device searches corresponding data to be flashed according to the fault application, the corresponding data to be flashed is referred to as the second-data-to-be-flashed in the present application. The flashing device generates a program flashing command according to the second-data-to-be-flashed, and sends the program flashing command to the ECU.

Optionally, after generating the program flashing command, the flashing device may send inquiry information to the ECU. If the ECU receives the inquiry information sent by the flashing device, the ECU may return an acknowledging command to the flashing device. After receiving the acknowledging command sent by the ECU, the flashing device sends the program flashing command to the ECU.

In a step of S203, the program flashing command sent by the flashing device is received, and flashing is performed using the second-data-to-be-flashed contained in the program flashing command.

In this embodiment, the program flashing command may include an identifier of an application program to be flashed and the second-data-to-be-flashed. The identifier may be comprised of numbers, letters, symbols, and the like. Each application program corresponds to one identifier uniquely.

In this embodiment, after receiving the program flashing command sent by the flashing device, the ECU parses the program flashing command to obtain the second-data-to-be-flashed of the application program to be flashed, and then performs flashing using the second-data-to-be-flashed.

Specifically, the processing of the second-data-to-be-flashed by the ECU is the same as the processing of the first-data-to-be-flashed. The processing of the second-data-to-be-flashed by the ECU can refer to the descriptions of the step S104, and is not repeatedly described herein.

In this embodiment, when the application program has no fault, the flashing device may further send flash data of the application program of the latest version to the ECU. The ECU receives the flash data of the application program of the latest version sent by the flashing device, and stores the flash data of the application program of the latest version.

In one possible implementation mode, the implementation process of the step S202 may include:
In a step of S2021, state information of the vehicle is obtained.

In this embodiment, after receiving the fault query instruction sent by the flashing device, the ECU may obtain the state information of the vehicle.

In this embodiment, the state information of the vehicle may include a vehicle speed, an engine speed, a power switch position, and the like. The obtaining of the state information of the vehicle is used for determining whether the vehicle is in an operating state. If the vehicle is in the operating state, the ECU cannot be flashed. Specifically, the vehicle speed and the engine speed are used to determine whether the vehicle is in a stationary state. The power switch position is used to determine whether an electronic device in the vehicle is electrified.

Specifically, after the state information of the vehicle is obtained, whether the vehicle speed is within a first preset range, whether the engine speed is within a second preset range, and whether the power switch position is at an ON position may be determined. The power switch supplies power to all electronic devices in the vehicle when the power switch position is at the ON position. The first preset range and the second preset range may be set as needed.

In a step of S2022, the fault code of the fault program is sent to the flashing device if the state information meets the preset requirement.

In this embodiment, the state information meeting the preset requirement includes the vehicle speed is within the first preset range, the engine speed is within the second preset range, and the power switch position is at the ON position.

In this embodiment of the present application, the status of the vehicle is determined before flashing, the ECU is flashed when the vehicle state information meets the requirement, so that a phenomenon of vehicle failure caused by flashing during driving of the vehicle may be avoided.

It should be understood that, the values of serial numbers of the steps in the aforementioned embodiments do not indicate an order of execution sequences of the steps. Instead, the execution sequences of the steps should be determined by functionalities and internal logic of the steps, and thus shouldn't be regarded as limitation to implementation processes of the embodiments of the present application.

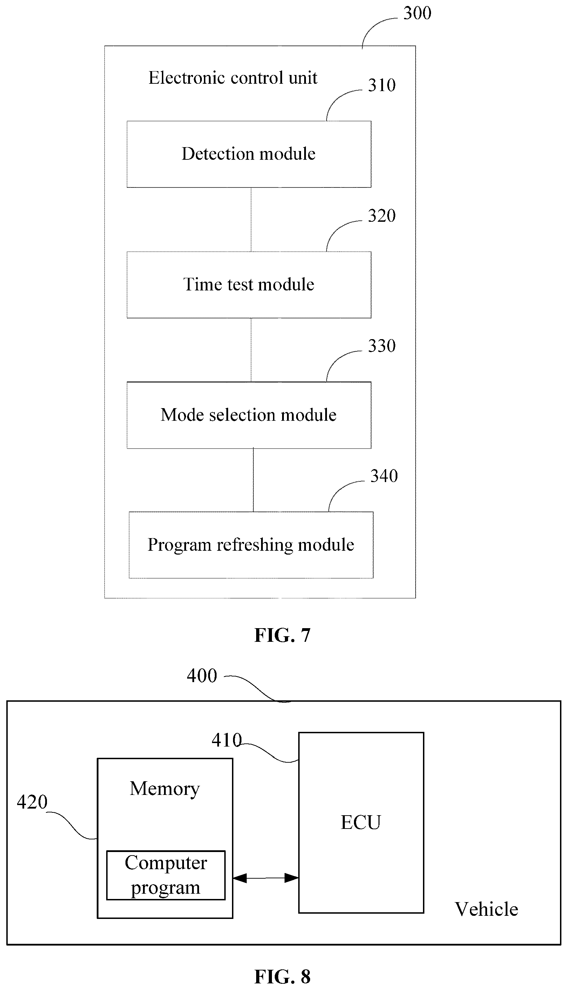

Corresponding to the method for flashing the vehicle-mounted ECU according to the embodiments described above, FIG. 7 illustrates a structural block diagram of an electronic control unit (ECU) according to one embodiment of the present application. For the convenience of illustration, the part related to the embodiments of the present application is merely shown.

Referring to FIG. 7, the ECU 300 may include a detection module 310, a time test module 320, a mode selection module 330 and a program flashing module 340.

Among which, the detection module 310 is configured to detect whether a first operation is performed after the ECU is electrified, where the first operation is an operation performed on a vehicle on which the ECU is mounted.

The time test module 320 is configured to obtain time duration of the first operation after the first operation is detected.

The mode selection module 330 is configured to enter an emergency boot mode if the time duration is greater than a preset threshold value, where an application program in the ECU is not executed by the ECU in the emergency boot mode.

The program flashing module 340 is configured to obtain first-data-to-be-flashed and use the first-data-to-be-flashed to perform flashing.

In one possible implementation mode, the mode selection module 330 may be further configured to:
obtain a level signal of a first pin, where the first pin is a pin on an OBD interface of the vehicle configured to connect to an Ethernet communication interface, the Ethernet communication interface in the ECU is in an activated state when the level signal is at a high level, the Ethernet communication interface is in an unactivated state when the level signal is at a low level;
enter the emergency boot mode correspondingly if the time duration is greater than the preset threshold value and the level signal of the first pin is at a high level.

In one possible implementation mode, the first pin is a pull-up pin of an Ethernet activation line.

In one possible implementation mode, the first operation includes at least one of a braking operation, a key press operation on an air conditioning, and a key press operation on a steering wheel.

In one possible implementation mode, when the first operation includes the braking operation, the detection module 31 may be specifically configured to:
obtain a level signal of a preset circuit in the vehicle; and
determine that the first operation is detected if the level signal meets a preset operation requirement. In one possible implementation mode, modules connected to the detection module 31 may further include:
   a first selection module configured to enter a normal boot mode if the first operation is not detected within a preset time after the ECU is electrified, where the ECU executes an application program in the ECU under the normal boot mode;
   a second selection module configured to enter the normal boot mode, if the time duration is less than or equal to the preset threshold value and/or the level signal of the first pin is at a low level.

In one possible implementation mode, after entering the normal boot mode, the program flashing module 340 may be specifically configured to:
execute the application program in the ECU;
send, if the application program has a fault and a fault query instruction sent by a flashing device is received, a fault code of the fault program to the flashing device, where the fault code is used to instruct the flashing device to search second-data-to-be-flashed of a fault application corresponding to the fault code and generate a program flashing command based on the second-data-to-be-flashed, and send the program flashing command to the flashing device;
receive the program flashing command sent by the flashing device, and flash the second-data-to-be-flashed contained in the program flashing command into the ECU.

In one possible implementation mode, the program flashing module 340 may be specifically configured to:
obtain status information of the vehicle, where the status information comprises a vehicle speed, an engine speed, and a power switch position;
send the fault code of the fault program to the flashing device if the state information meets a preset requirement.

It needs to be noted that, since contents including information interaction and the execution process between the various devices/units, and the method embodiment of the present application are based on the same concept, regarding the specific functions and the technical effects achieved by the functions, reference can be made to the method embodiments. The contents including information interaction and the execution process between the various devices/units are not repeatedly described herein.

The person of ordinary skill in the art may clearly understand that, for the convenience of illustration and for conciseness, the dividing of the aforementioned various functional units and modules is merely described as examples. In an actual application, the aforementioned functions may be assigned to functional units and modules to be accomplished, that is, an inner structure of the device is divided into different functional units and modules for accomplishing the whole or a part of functionalities described above. The various functional units and modules in the embodiments may be integrated into one processing unit, or each of the units exists independently and physically. As an alternative, two or more than two of the units are integrated into one single unit. The aforementioned integrated units may either by actualized in the form of hardware or in the form of software functional units. In addition, the specific names of the various functional units and modules are only used to distinguish them from each other conveniently, rather than limiting the protection scope of the present application. Regarding the specific operating process of the units and modules in the system, reference may be made to the corresponding process in the aforementioned method embodiments. This specific operating process of the units and modules is not repeatedly described herein.

A vehicle is further provided in the embodiments of the present application. As shown in FIG. 8, the vehicle 400 includes an ECU 410, a memory 420, and a computer program stored in the memory 420 and executable by the ECU 410. The ECU 410 is configured to implement the steps (e.g., the steps S101-S104 in the embodiments shown in FIG. 2) in the various method embodiments when executing the computer program. As an alternative, the ECU 410 is configured to implement the functions of the various modules/units (e.g., the modules 310-340 as shown in FIG. 7) in the various apparatus embodiments when executing the computer program.

For example, the computer program may be divided into one or a plurality of modules/units, the one or plurality of modules/units are stored in the memory 420, and executed by the ECU 410 so as to implement the present application. The one or plurality of modules/units may be a series of computer program instruction segments that can accomplish particular functionalities, these instruction segments are used for describing an executive process of the computer program in the vehicle 400.

The person of ordinary skill in the art may be aware of the fact that, FIG. 8 is merely an example of the vehicle, and is not constituted as limitation to the vehicle, more or less components than the components shown in FIG. 8 may be included, or some components or different components may be combined. For example, the vehicle may also include an input and output device, a network access device, a bus, etc.

The ECU 410 may be central processing unit (CPU), and may also be other general purpose processor, digital signal processor (DSP), application specific integrated circuit (ASIC), field-programmable gate array (FGPA), or some other programmable logic devices, discrete gate or transistor logic device, discrete hardware component, etc. The general purpose processor may be a microprocessor, as an alternative, the processor can also be any conventional processor, or the like.

The method for flashing the vehicle-mounted ECU provided in the embodiments of the present application may be applied to terminal devices such as computers, tablets, laptops, netbooks, personal digital assistants (PDAs), etc. The specific types of the terminal devices are not limited in the embodiments of the present application.

A computer-readable storage medium is further provided in the embodiments of the present application. The computer-readable storage medium stores a computer program, when the computer program is executed by a processor, steps of the various method embodiments for flashing the vehicle-mounted ECU may be implemented.

A computer program product is provided in the embodiments of the present application. When the computer program product is executed on a mobile terminal, the mobile terminal is caused to implement the steps of the various method embodiments for flashing the vehicle-mounted ECU.

When the integrated modules are achieved in the form of software functional units, and is sold or used as an independent product, the integrated modules may be stored in a computer-readable storage medium. Based on this understanding, a whole or part of flow process for implementing the method in the embodiments of the present application can also be accomplished in the manner of using computer program to instruct relevant hardware. When the computer program is executed by the processor, the steps in the various method embodiments described above may be implemented. Wherein, the computer program comprises computer program codes, which may be in the form of source code, object code, executable documents or some intermediate form, etc. The computer readable medium may at least include: any physical equipment or device that can carry the computer program codes to a photographing device/terminal device, recording medium, computer memory, ROM (Read-Only Memory), RAM (Random Access Memory), electrical carrier signal, telecommunication signal and software distribution medium, such as USB flash disk, mobile hard disk drive, diskette or optical disk. In some judicial districts, according to legislation and patent practice, the computer readable medium doesn't include electrical carrier signal and telecommunication signal.

In the embodiments of the present application, the descriptions of the embodiments in the present application are emphasized respectively, regarding the part in some embodiments which is not described in detail, reference can be made to relevant descriptions in other embodiments.

The person of ordinary skill in the art may understand that, the units and the algorithm steps of each of the examples described with reference to the embodiments disclosed herein may be implemented in electronic hardware, or in combination with computer software and electronic hardware. Whether these functions are implemented by hardware or software depends on the specific application and design constraints of the technical solution. The skilled people could use different methods to implement the described functions for each particular application, however, such implementations should not be considered as going beyond the scope of the present application.

It should be understood that, in the embodiments of the present application, the disclosed apparatus/network devices and the methods could be implemented in other ways. For example, embodiments of the apparatuses/network devices described above are merely illustrative. For example, the division of the units is only a logical function division, and other division could be used in the actual implementation, for example, multiple units or components could be combined or integrated into another system, or some features may be ignored, or not performed. In another aspect, the coupling or direct coupling or communicating connection shown or discussed could be an indirect coupling or a communicating connection through some interfaces, devices or units, and the coupling or direct coupling or communicating connection could be electrical, mechanical, or in other form.

The units described as separate components can be or cannot be physically separate, the components shown as units can be or cannot be physical units, the components may be located in one place, or be distributed onto multiple network elements. A part or a whole of the elements can be selected to achieve the objective of the technical solution of this embodiment according to the actual requirement.

## Claims

1. A method for flashing a vehicle-mounted electronic control unit, ECU (300), wherein the method is applied to the ECU (300), and the method comprises:
detecting (S101), after the ECU (300) is electrified in a restart process, within a preset time after each restart, whether a first operation is performed on the vehicle on which the ECU (300) is mounted;
obtaining (S102), if the first operation is detected, the time duration of the first operation after the ECU (300) is electrified;
obtaining a level signal of a first pin, wherein the first pin is a pin on an on-board diagnostics, OBD, interface of the vehicle configured to connect to an Ethernet communication interface, the Ethernet communication interface in the ECU (300) being in an activated state when the level signal is at a high level and in an unactivated state when the level signal is at a low level;
entering (S103) an emergency boot mode of the ECU (300) if the time duration is greater than a preset threshold value and the level signal of the first pin is at the high level, wherein the ECU (300) does not execute an application program in the ECU (300) in the emergency boot mode;
entering a normal boot mode if the first operation is not detected within the preset time after the ECU (300) is electrified and/or if the time duration is less than or equal to the preset threshold value and/or if the level signal of the first pin is at the low level, wherein in the normal boot mode the ECU (300) executes an application program in the ECU (300); and
obtaining (S104) first-data-to-be-flashed from an external computer via the Ethernet communication interface of the ECU (300) connected through the OBD interface, and flashing the first-data-to-be-flashed into the ECU (300) when the ECU is in the emergency boot mode.

2. The method for flashing the vehicle-mounted ECU (300) according to claim 1, wherein the first pin is a pull-up pin of an Ethernet activation line.

3. The method for flashing the vehicle-mounted ECU (300) according to any one of claims 1 to 2, wherein the first operation comprises at least one of a braking operation, a key press operation on an air conditioning, and a key press operation on a steering wheel.

4. The method for flashing the vehicle-mounted ECU (300) according to any one of claims 1 to 3, wherein detecting whether the first operation is performed on the vehicle on which the ECU (300) is mounted comprises:
obtaining a level signal of a preset circuit in the vehicle; and
determining that the first operation is performed on the vehicle on which the ECU (300) is mounted, if the level signal meets a preset operation requirement.

5. The method for flashing the vehicle-mounted ECU (300) according to claim 1, wherein after the entering the normal boot mode, the method comprises:
executing (S201) the application program in the ECU (300);
sending (S202), if the application program has a fault and a fault query instruction sent by a flashing device is received, a fault code of the fault program to the flashing device, wherein the fault code is used to instruct the flashing device to generate a program flashing command based on second-data-to-be-flashed of a fault application corresponding to the fault code, and sending the program flashing command to the ECU (300);
receiving (S203) the program flashing command sent by the flashing device, and flashing the second-data-to-be-flashed contained in the program flashing command into the ECU.

6. The method for flashing the vehicle-mounted ECU (300) according to claim 5, wherein the sending the fault code of the fault program to the flashing device comprises:
obtaining status information of the vehicle, wherein the status information comprises a vehicle speed, an engine speed, and a power switch position;
sending the fault code of the fault program to the flashing device if the state information meets a preset requirement.

7. The method for flashing the vehicle-mounted ECU (300) according to claim 6, wherein a condition that the state information meets the preset requirement comprises: the vehicle speed is within a first preset range, the engine speed is within a second preset range, and the power switch position is positioned at an ON position.

8. The method for flashing the vehicle-mounted ECU (300) according to claim 1, wherein the ECU executes a bootloader, that is, a boot program, in the emergency boot mode, wherein the boot program is a boot file of a system, and the boot program is used to enable the ECU to boot into a corresponding operating system.

9. The method for flashing the vehicle-mounted ECU (300) according to claim 3, wherein the first operation comprises the braking operation, the detecting whether the first operation is exerted comprises:
obtaining a level signal of a brake switch in the vehicle;
determining that the first operation is detected, if the level signal of the brake switch meets a braking requirement;
determining that the first operation is not detected, if the level signal of the brake switch does not meet the braking requirement.

10. The method for flashing the vehicle-mounted ECU (300) according to claim 3, wherein the key press operation on the steering wheel comprises: a turn signal lamp turn-on operation, a windshield wiper turn-on operation, and/or a horn turn-on operation.

11. An ECU (300), wherein the ECU (300) comprises:
a detection module (310) configured to, after the ECU (300) is electrified in a restart process, within a preset time after each restart, detect whether a first operation is performed after the ECU (300) is electrified, wherein the first operation is an operation performed on a vehicle on which the ECU (300) is mounted;
a time test module (320) configured to, if the first operation is detected, obtain a time duration of the first operation after the ECU (300) is electrified;
a mode selection module (330) configured to obtain a level signal of a first pin, wherein the first pin is a pin on an on-board diagnostics, OBD, interface of the vehicle configured to connect to an Ethernet communication interface, the Ethernet communication interface in the ECU (300) being in an activated state when the level signal is at a high level and in an unactivated state when the level signal is at a low level, and configured to enter an emergency boot mode of the ECU (300) if the time duration is greater than a preset threshold value and the level signal of the first pin is at the high level, wherein the ECU (300) is configured to not execute an application program in the ECU (300) in the emergency boot mode, and to enter a normal boot mode if the first operation is not detected within the preset time after the ECU (300) is electrified and/or if the time duration is less than or equal to the preset threshold value and/or if the level signal of the first pin is at the low level, wherein in the normal boot mode the ECU (300) executes the application program; and
a program flashing module (340) configured to obtain first-data-to-be-flashed from an external computer via the Ethernet communication interface of the ECU (300) connected through the OBD interface, and configured to flash the first-data-to-be-flashed into the ECU (300) when the ECU is in the emergency boot mode.

12. A vehicle (400), comprising a memory (420), an ECU (410) and a computer program stored in the memory and executable by the ECU (410), wherein the ECU (410) is configured to, when executing the computer program, implement the method for flashing the vehicle-mounted ECU (410) according to any one of claims 1-10.

13. A computer readable storage medium, which stores a computer program, wherein when the computer program is executed by a processor, the method for flashing the vehicle-mounted ECU according to any one of claims 1-10 is implemented.

## Patentansprüche

1. Verfahren zum Flashen einer fahrzeug-verbauten elektronischen Steuereinheit, ECU (300), wobei das Verfahren auf die ECU (300) angewendet wird und das Verfahren aufweist:
Erkennen (S101), nachdem die ECU (300) in einem Neustartvorgang eingeschaltet wird, innerhalb einer vorgegebenen Zeit nach jedem Neustart, ob eine erste Bedienung an dem Fahrzeug, auf dem die ECU (300) verbaut ist, durchgeführt wird;
Erhalten (S102), falls die erste Bedienung erkannt wird, der Zeitdauer der ersten Bedienung nach dem Einschalten der ECU (300);
Erhalten eines Pegelsignals eines ersten Pins, wobei der erste Pin ein Pin an einer On-Board-Diagnose-Schnittstelle, OBD-Schnittstelle, des Fahrzeugs ist, der dazu ausgelegt ist, eine Ethernet-Kommunikationsschnittstelle zu verbinden, wobei die Ethernet-Kommunikationsschnittstelle in der ECU (300) in einem aktivierten Zustand ist, wenn das Pegelsignal auf dem High-Pegel liegt, und in einem nicht aktivierten Zustand ist, wenn das Pegelsignal auf dem Low-Pegel liegt;
Eintreten (S103) in einen Notstartmodus der ECU (300), falls die Zeitdauer größer als ein vorgegebener Schwellenwert ist und das Pegelsignal des ersten Pins auf dem High-Pegel liegt, wobei die ECU (300) im Notstartmodus kein Anwendungsprogramm in der ECU (300) ausführt;
Eintreten in einen normalen Startmodus, falls die erste Bedienung innerhalb der vorgegebenen Zeit nach dem Einschalten der ECU (300) nicht erkannt wird und/oder falls die Zeitdauer kleiner als oder gleich dem vorgegebenen Schwellenwert ist und/oder falls das Pegelsignal des ersten Pins auf dem Low-Pegel liegt, wobei die ECU (300) im normalen Startmodus ein Anwendungsprogramm in der ECU (300) ausführt; und
Erhalten (S104) erster zu flashender Daten von einem externen Computer über die Ethernet-Kommunikationsschnittstelle der ECU (300), der über die OBD-Schnittstelle verbunden ist, und Flashen der ersten zu flashenden Daten in die ECU (300), wenn die ECU sich im Notstartmodus befindet.

2. Verfahren zum Flashen der fahrzeug-verbauten ECU (300) nach Anspruch 1, wobei der erste Pin ein Pull-up-Pin einer Ethernet-Aktivierungsleitung ist.

3. Verfahren zum Flashen der fahrzeug-verbauten ECU (300) nach einem der Ansprüche 1 bis 2, wobei die erste Bedienung mindestens eines von einer Bremsbedienung, einer Tastendruckbedienung an einer Klimaanlage und einer Tastendruckbedienung an einem Lenkrad aufweist.

4. Verfahren zum Flashen der fahrzeug-verbauten ECU (300) nach einem der Ansprüche 1 bis 3, wobei das Erkennen, ob die erste Bedienung an dem Fahrzeug, auf dem die ECU (300) verbaut ist, durchgeführt wird, aufweist:
Erhalten eines Pegelsignals eines voreingestellten Schaltkreises im Fahrzeug; und
Bestimmen, dass die erste Bedienung an dem Fahrzeug, auf dem die ECU (300) verbaut ist, durchgeführt wird, falls das Pegelsignal einer voreingestellten Bedienungsanforderung entspricht.

5. Verfahren zum Flashen der fahrzeug-verbauten ECU (300) nach Anspruch 1, wobei nach dem Eintreten in den normalen Startmodus das Verfahren aufweist:
Ausführen (S201) des Anwendungsprogramms in der ECU (300);
Senden (S202), falls das Anwendungsprogramm einen Fehler aufweist und eine von einem Flash-Gerät gesendete Fehlerabfrageanweisung empfangen wird, eines Fehlercodes des fehlerhaften Programms an das Flash-Gerät, wobei der Fehlercode dazu verwendet wird, das Flash-Gerät anzuweisen, einen Programm-Flash-Befehl basierend auf zweiten zu flashenden Daten einer dem Fehlercode entsprechenden fehlerhaften Anwendung zu erzeugen, und den Programm-Flash-Befehl an die ECU (300) zu senden;
Empfangen (S203) des von dem Flash-Gerät gesendeten Programm-Flash-Befehls und Flashen der in dem Programm-Flash-Befehl enthaltenen zweiten zu flashenden Daten in die ECU.

6. Verfahren zum Flashen der fahrzeug-verbauten ECU (300) nach Anspruch 5, wobei das Senden des Fehlercodes des fehlerhaften Programms an das Flash-Gerät aufweist:
Erhalten von Statusinformationen des Fahrzeugs, wobei die Statusinformationen eine Fahrzeuggeschwindigkeit, eine Motordrehzahl und eine Stellung eines Netzschalters aufweisen;
Senden des Fehlercodes des fehlerhaften Programms an das Flash-Gerät, falls die Zustandsinformationen eine vorgegebene Anforderung erfüllen.

7. Verfahren zum Flashen der fahrzeug-verbauten ECU (300) nach Anspruch 6, wobei eine Bedingung dafür, dass die Zustandsinformationen die vorgegebene Anforderung erfüllen, aufweist: die Fahrzeuggeschwindigkeit liegt innerhalb eines ersten vorgegebenen Bereichs, die Motordrehzahl liegt innerhalb eines zweiten vorgegebenen Bereichs und die Stellung des Netzschalters befindet sich in einer EIN-Stellung.

8. Verfahren zum Flashen der fahrzeug-verbauten ECU (300) nach Anspruch 1, wobei die ECU im Notstartmodus einen Bootloader, d. h. ein Bootprogramm, ausführt, wobei das Bootprogramm eine Bootdatei eines Systems ist und das Bootprogramm dazu verwendet wird, die ECU dazu zu veranlassen, in ein entsprechendes Betriebssystem zu starten.

9. Verfahren zum Flashen der fahrzeug-verbauten ECU (300) nach Anspruch 3, wobei die erste Bedienung die Bremsbedienung aufweist, wobei das Erkennen, ob die erste Bedienung ausgeübt wird, aufweist:
Erhalten eines Pegelsignals eines Bremsschalters im Fahrzeug;
Bestimmen, dass die erste Bedienung erkannt wird, falls das Pegelsignal des Bremsschalters eine Bremsanforderung erfüllt;
Bestimmen, dass die erste Bedienung nicht erkannt wird, falls das Pegelsignal des Bremsschalters die Bremsanforderung nicht erfüllt.

10. Verfahren zum Flashen der fahrzeug-verbauten ECU (300) nach Anspruch 3, wobei die Tastendruckbedienung an dem Lenkrad aufweist: eine Blinkleuchteneinschalt-Bedienung, eine Scheibenwischereinschalt-Bedienung und/oder eine Hupeneinschalt-Bedienung.

11. ECU (300), wobei die ECU (300) aufweist:
ein Erkennungsmodul (310), das dazu ausgelegt ist, nachdem die ECU (300) in einem Neustartvorgang eingeschaltet wird, innerhalb einer vorgegebenen Zeit nach jedem Neustart zu erkennen, ob eine erste Bedienung nach dem Einschalten der ECU (300) durchgeführt wird, wobei die erste Bedienung eine Bedienung ist, die an einem Fahrzeug, auf dem die ECU (300) verbaut ist, durchgeführt wird;
ein Zeitprüfmodul (320), das dazu ausgelegt ist, falls die erste Bedienung erkannt wird, eine Zeitdauer der ersten Bedienung nach dem Einschalten der ECU (300) zu erhalten;
ein Modusauswahlmodul (330), das dazu ausgelegt ist, ein Pegelsignal eines ersten Pins zu erhalten, wobei der erste Pin ein Pin an einer On-Board-Diagnose-Schnittstelle, OBD-Schnittstelle, des Fahrzeugs ist, der dazu ausgelegt ist, eine Ethernet-Kommunikationsschnittstelle zu verbinden, wobei die Ethernet-Kommunikationsschnittstelle in der ECU (300) in einem aktivierten Zustand ist, wenn das Pegelsignal auf dem High-Pegel liegt, und in einem nicht aktivierten Zustand ist, wenn das Pegelsignal auf dem Low-Pegel liegt, und das dazu ausgelegt ist, in einen Notstartmodus der ECU (300) einzutreten, falls die Zeitdauer größer als ein vorgegebener Schwellenwert ist und das Pegelsignal des ersten Pins auf dem High-Pegel liegt, wobei die ECU (300) dazu ausgelegt ist, im Notstartmodus kein Anwendungsprogramm in der ECU (300) auszuführen, und in einen normalen Startmodus einzutreten, falls die erste Bedienung innerhalb der vorgegebenen Zeit nach dem Einschalten der ECU (300) nicht erkannt wird und/oder falls die Zeitdauer kleiner als oder gleich dem vorgegebenen Schwellenwert ist und/oder falls das Pegelsignal des ersten Pins auf dem Low-Pegel liegt, wobei die ECU (300) im normalen Startmodus das Anwendungsprogramm ausführt; und
ein Programm-Flash-Modul (340), das dazu ausgelegt ist, erste zu flashende Daten von einem externen Computer über die Ethernet-Kommunikationsschnittstelle der ECU (300), der über die OBD-Schnittstelle verbunden ist, zu erhalten, und das dazu ausgelegt ist, die ersten zu flashenden Daten in die ECU (300) zu flashen, wenn die ECU sich im Notstartmodus befindet.

12. Fahrzeug (400), aufweisend einen Speicher (420), eine ECU (410) und ein in dem Speicher gespeichertes und von der ECU (410) ausführbares Computerprogramm, wobei die ECU (410) dazu ausgelegt ist, beim Ausführen des Computerprogramms das Verfahren zum Flashen der fahrzeug-verbauten ECU (410) nach einem der Ansprüche 1 bis 10 zu implementieren.

13. Computerlesbares Speichermedium, das ein Computerprogramm speichert, wobei bei Ausführung des Computerprogramms durch einen Prozessor das Verfahren zum Flashen der fahrzeug-verbauten ECU nach einem der Ansprüche 1 bis 10 implementiert wird.

## Revendications

1. Procédé pour faire clignoter une unité de commande électronique, ECU, (300) montée sur un véhicule, dans lequel le procédé est appliqué à l'ECU (300), et le procédé comprend :
la détection (S101), après que l'ECU (300) a été électrifiée lors d'un processus de redémarrage, à l'intérieur d'un temps prédéfini après chaque redémarrage, si une première opération a été réalisée ou non sur le véhicule sur lequel l'ECU (300) est montée ;
l'obtention (S102), si la première opération a été détectée, de la durée temporelle de la première opération après que l'ECU (300) a été électrifiée ;
l'obtention d'un signal de niveau d'une première broche, dans lequel la première broche est une broche sur une interface de diagnostic embarquée, OBD, du véhicule qui est configurée pour être connectée sur une interface de communication Ethernet, l'interface de communication Ethernet dans l'ECU (300) étant dans un état activé lorsque le signal de niveau est à un niveau haut et dans un état désactivé lorsque le signal de niveau est à un niveau bas ;
l'entrée (S103) dans un mode de démarrage d'urgence de l'ECU (300) si la durée temporelle est supérieure à une valeur de seuil prédéfinie et que le signal de niveau de la première broche est au niveau haut, dans lequel l'ECU (300) n'exécute pas un programme d'application dans l'ECU (300) dans le mode de démarrage d'urgence ;
l'entrée dans un mode de démarrage normal si la première opération n'a pas été détectée à l'intérieur du temps prédéfini après que l'ECU (300) a été électrifiée et/ou si la durée temporelle est inférieure ou égale à la valeur de seuil prédéfinie et/ou si le signal de niveau de la première broche est au niveau bas, dans lequel, dans le mode de démarrage normal, l'ECU (300) exécute un programme d'application dans l'ECU (300) ; et
l'obtention (S104) de premières données à faire clignoter en provenance d'un ordinateur externe via l'interface de communication Ethernet de l'ECU (300) qui est connectée par l'intermédiaire de l'interface OBD et le clignotement des premières données à faire clignoter à l'intérieur de l'ECU (300) lorsque l'ECU est dans le mode de démarrage d'urgence.

2. Procédé pour faire clignoter l'ECU (300) montée sur un véhicule selon la revendication 1, dans lequel la première broche est une broche d'excursion haute d'une ligne d'activation d'Ethernet.

3. Procédé pour faire clignoter l'ECU (300) montée sur un véhicule selon l'une quelconque des revendications 1 et 2, dans lequel la première opération comprend au moins une opération parmi une opération de freinage, une opération de pression de touche(s) sur une climatisation et une opération de pression de touche(s) sur un volant de direction.

4. Procédé pour faire clignoter l'ECU (300) montée sur un véhicule selon l'une quelconque des revendications 1 à 3, dans lequel la détection de si la première opération a été réalisée ou non sur le véhicule sur lequel l'ECU (300) est montée comprend :
l'obtention d'un signal de niveau d'un circuit de prédéfinition dans le véhicule ; et
la détermination du fait que la première opération a été réalisée sur le véhicule sur lequel l'ECU (300) est montée si le signal de niveau satisfait une exigence de fonctionnement prédéfinie.

5. Procédé pour faire clignoter l'ECU (300) montée sur un véhicule selon la revendication 1, dans lequel, après l'entrée dans le mode de démarrage normal, le procédé comprend :
l'exécution (S201) du programme d'application dans l'ECU (300) ;
l'envoi (S202), si le programme d'application présente une anomalie et qu'une instruction de requête d'anomalie qui a été envoyée par un dispositif de clignotement a été reçue, d'un code d'anomalie du programme d'anomalie sur le dispositif de clignotement, dans lequel le code d'anomalie est utilisé pour demander au dispositif de clignotement de générer une commande de clignotement de programme sur la base de secondes données à faire clignoter d'une application d'anomalie qui correspond au code d'anomalie, et l'envoi de la commande de clignotement de programme à l'ECU (300) ; et
la réception (S203) de la commande de clignotement de programme qui a été envoyée par le dispositif de clignotement et le clignotement des secondes données à faire clignoter qui sont contenues dans la commande de clignotement de programme à l'intérieur de l'ECU.

6. Procédé pour faire clignoter l'ECU (300) montée sur un véhicule selon la revendication 5, dans lequel l'envoi du code d'anomalie du programme d'anomalie sur le dispositif de clignotement comprend :
l'obtention d'une information d'état du véhicule, dans lequel l'information d'état comprend une vitesse du véhicule, une vitesse du moteur et une position du commutateur d'alimentation ; et
l'envoi du code d'anomalie du programme d'anomalie sur le dispositif de clignotement si l'information d'état satisfait une exigence prédéfinie.

7. Procédé pour faire clignoter l'ECU (300) montée sur un véhicule selon la revendication 6, dans lequel une condition sur la base de laquelle l'information d'état satisfait l'exigence prédéfinie comprend : la vitesse du véhicule est à l'intérieur d'une première plage prédéfinie, la vitesse du moteur est à l'intérieur d'une seconde plage prédéfinie et la position du commutateur d'alimentation est positionnée à une position MARCHE.

8. Procédé pour faire clignoter l'ECU (300) montée sur un véhicule selon la revendication 1, dans lequel l'ECU exécute un gestionnaire de démarrage, qui est un programme de démarrage, dans le mode de démarrage d'urgence, dans lequel le programme de démarrage est un fichier de démarrage d'un système, et le programme de démarrage est utilisé pour permettre le démarrage de l'ECU au sein d'un système d'exploitation correspondant.

9. Procédé pour faire clignoter l'ECU (300) montée sur un véhicule selon la revendication 3, dans lequel la première opération comprend l'opération de freinage, et la détection de si la première opération a été réalisée ou non comprend :
l'obtention d'un signal de niveau d'un commutateur de frein dans le véhicule ;
la détermination du fait que la première opération a été détectée, si le signal de niveau du commutateur de frein satisfait une exigence de freinage ; et
la détermination du fait que la première opération n'a pas été détectée si le signal de niveau du commutateur de frein ne satisfait pas l'exigence de freinage.

10. Procédé pour faire clignoter l'ECU (300) montée sur un véhicule selon la revendication 3, dans lequel l'opération de pression de touche(s) sur le volant de direction comprend : une opération d'activation de feu clignotant, une opération d'activation d'essuie-glace et/ou une opération d'activation de klaxon.

11. ECU (300), dans laquelle l'ECU (300) comprend :
un module de détection (310) configuré pour, après que l'ECU (300) a été électrifiée lors d'un processus de redémarrage, à l'intérieur d'un temps prédéfini après chaque redémarrage, détecter si une première opération a été réalisée ou non après que l'ECU (300) a été électrifiée, dans laquelle la première opération est une opération qui est réalisée sur un véhicule sur lequel l'ECU (300) est montée ;
un module de test de temps (320) configuré pour, si la première opération a été détectée, obtenir une durée temporelle de la première opération après que l'ECU (300) a été électrifiée ;
un module de sélection de mode (330) configuré pour obtenir un signal de niveau d'une première broche, dans laquelle la première broche est une broche sur une interface de diagnostic embarquée, OBD, du véhicule qui est configurée pour être connectée sur une interface de communication Ethernet, l'interface de communication Ethernet dans l'ECU (300) étant dans un état activé lorsque le signal de niveau est à un niveau haut et dans un état désactivé lorsque le signal de niveau est à un niveau bas, et configuré pour entrer dans un mode de démarrage d'urgence de l'ECU (300) si la durée temporelle est supérieure à une valeur de seuil prédéfinie et que le signal de niveau de la première broche est au niveau haut, dans laquelle l'ECU (300) est configurée pour ne pas exécuter un programme d'application dans l'ECU (300) dans le mode de démarrage d'urgence, et pour entrer dans un mode de de démarrage normal si la première opération n'a pas été détectée à l'intérieur du temps prédéfini après que l'ECU (300) a été électrifiée et/ou si la durée temporelle est inférieure ou égale à la valeur de seuil prédéfinie et/ou si le signal de niveau de la première broche est au niveau bas, dans laquelle, dans le mode de démarrage normal, l'ECU (300) exécute le programme d'application ; et
un module de clignotement de programme (340) configuré pour obtenir des premières données à faire clignoter en provenance d'un ordinateur externe via l'interface de communication Ethernet de l'ECU (300) qui est connectée par l'intermédiaire de l'interface OBD, et configuré pour faire clignoter les premières données à faire clignoter à l'intérieur de l'ECU (300) lorsque l'ECU est dans le mode de démarrage d'urgence.

12. Véhicule (400), comprenant une mémoire (420), une ECU (410) et un programme informatique qui est stocké dans la mémoire et qui peut être exécuté par l'ECU (410), dans lequel l'ECU (410) est configurée pour, lors de l'exécution du programme informatique, mettre en œuvre le procédé pour faire clignoter l'ECU (410) montée sur un véhicule selon l'une quelconque des revendications 1 à 10.

13. Support de stockage lisible par ordinateur, lequel stocke un programme informatique, dans lequel, lorsque le programme informatique est exécuté par un processeur, le procédé pour faire clignoter l'ECU montée sur un véhicule selon l'une quelconque des revendications 1 à 10 est mis en œuvre.
